# EUROPÄISCHE PATENTANMELDUNG

(11) **EP 3 106 253 A1**
(43) Veröffentlichungstag der Anmeldung: **21.12.2016**
(21) Anmeldenummer: 15172463.0
(22) Anmeldetag: 17.06.2015
(51) Int. Cl.: B23B 51/02, B21H 3/10, B23P 15/32, B21K 5/04, B28D 1/14, E21B 10/44

(54) **BOHRER UND HERSTELLUNGSVERFAHREN**

(71) Anmelder: HILTI Aktiengesellschaft, 9494 Schaan (LI)
(72) Erfinder: Domani, Guenter, 88138 Weissensberg (DE); Peters, Carsten, 9468 Sax (CH); Schroeder, Florian, 9470 Buchs (CH)
(74) Vertreter: Hilti Aktiengesellschaft Corporate Intellectual Property

(57) **Zusammenfassung**

Ein Bohrer **1** hat längs einer Bohrerachse **6** einen Bohrkopf **2,** eine mehrgängigen Wendel **3** aus zwei oder mehr Wendelstegen **12** und ein Einsteckende **4.** Die Wendel **3** weist in einem Förderbereich **15** eine Wendelsteigung **19** und eine Ganghöhe **20** auf. In einem dem Einsteckende **4** zugewandten Auslaufbereich **17** der Wendel **3** gehen die Wendelstege **12** innerhalb eines ersten Abschnitts **26** von einer Ausrichtung mit der Wendelsteigung **19** kontinuierlich in eine zu der Bohrerachse **6** parallele Ausrichtung über. Eine Länge **30** des Abschnitts **26** beträgt wenigstens ein Viertel der Ganghöhe **20** des Förderbereichs **15.** Die Wendelstege **12** sind in einem zweiten Abschnitt **27** parallel zu der Bohrerachse **6** ausgerichtet.

## Beschreibung

### GEBIET DER ERFINDUNG

Die vorliegende Erfindung betrifft einen Bohrer, insbesondere für den Abbau von mineralischen Bauwerkstoffen, und ein Herstellungsverfahren für den Bohrer.

Ein Bohrer zum Abbau mineralischer Bauwerkstoffe, z.B. US 7,628,232, hat einen Bohrkopf mit einer Meißelkante. Die Meißelkante wird durch ein Schlagwerk einer Handwerkzeugmaschine periodisch gegen den Bauwerkstoff geschlagen. Der Bauwerkstoff wird dabei zerstoßen. Der Bohrer wird fortlaufend um seine Bohrerachse gedreht, wodurch die Meißelkante von einem Schlag zum nächsten um einen Winkel gedreht wird. Der Bohrkopf kann bei dem Drehen zusätzlich Material von der Bohrlochwand abbrechen, wodurch sich ein etwa kreisförmiges Bohrloch ergibt. Die Wendel unterliegt hohen mechanischen Belastungen, insbesondere wenn der Anwender den Bohrer beim Bohren querbelastet.

### OFFENBARUNG DER ERFINDUNG

Der erfindungsgemäße Bohrer, welcher bevorzugt für eine schlagende Bearbeitung von mineralischen und armierten Bauwerkstoffen ausgelegt ist, hat längs einer Bohrerachse einen Bohrkopf, eine mehrgängigen Wendel aus zwei oder mehr Wendelstegen und ein Einsteckende. Die Wendel weist in einem Förderbereich eine Wendelsteigung und eine Ganghöhe auf. In einem dem Einsteckende zugewandten Auslaufbereich der Wendel gehen die Wendelstege innerhalb eines ersten Abschnitts von einer Ausrichtung mit der Wendelsteigung kontinuierlich in eine zu der Bohrerachse parallele Ausrichtung über. Eine Länge des Abschnitts beträgt wenigstens ein Viertel der Ganghöhe des Förderbereichs. Die Wendelstege sind in einem zweiten Abschnitt parallel zu der Bohrerachse ausgerichtet. Der Auslaufbereich mit dem schwach gekrümmten ersten Abschnitt und dem geradlinigen zweiten Abschnitt erweist sich als hilfreich Biegebelastungen aufzunehmen und die Biegespannungen zwischen dem Bohrkopf und dem Einsteckende zu dämpfen.

Eine Ausgestaltung sieht vor, dass ein Querschnitt in dem ersten Abschnitt und dem Förderbereich gleichbleibend ist. Der Querschnitt hat nur eine aufgrund der Helixform der

Wendel sich längs der Bohrerachse ändernde Orientierung. Der Querschnitt kann jedoch an beliebigen Stellen innerhalb des ersten Abschnitts und des Förderbereichs mit sich durch eine geeignete Drehung um die Achse zur vollständigen Deckung gebracht werden. Die Wendel setzt sich somit in den Auslaufbereich fort, jedoch steigt deren Wendelsteigung an und erreicht 90 Grad. Die Wendelstege ändern nicht ihrer Abmessungen, d.h. Höhe und Stärke. Biegespannungen können gleichmäßig eingeleitet werden und erzeugen keine lokalen Spitzen.

Eine Ausgestaltung sieht vor, dass die Wendelnuten in dem Förderbereich und dem ersten Abschnitt eine gleichbleibende Tiefe aufweisen.

Eine Ausgestaltung sieht vor, dass in dem ersten Bereich die Wendelsteigung der Wendelstege gegenüber der Bohrerachse mit einer Rate zwischen 0,25 Grad und 2 Grad pro einem Grad in dem Drehsinn der Wendel abnimmt. Die Wendelsteigung ändert sich vorzugsweise kontinuierlich über die gesamte Länge des ersten Bereichs. Die Wendelsteigung kann im Förderbereich zwischen 30 Grad und 70 Grad betragen, die Wendelsteigung in dem ersten Bereich nimmt kontinuierlich ab, bis diese Wendelsteigung erreicht ist.

Eine Ausgestaltung sieht vor, dass eine Länge des zweiten Abschnitts zwischen einem Viertel und dem Dreifachen der Ganghöhe des Förderbereichs liegt. Der zweite Abschnitt verlängert den Bohrer unnötig, auch hat keine und nur eine sehr geringe Förderwirkung für das Bohrmehl. Dieser zweite Abschnitt kann jedoch die Dauerfestigkeit des Bohrers erhöhen. Ein Querschnitt des zweiten Abschnitts kann über wenigstens die Hälfte des zweiten Abschnitts konstant sein.

Ein Herstellungsverfahren für den Bohrer kann folgende Schritte umfassen. In einen zylindrischen Rohling werden mehrere geradlinige, parallel zu der Achse des Rohlings ausgerichtete Längsnuten eingeformt. Die Längsnuten werden mit einem Verdrallwerkzeug verdrallt. Ein Teilabschnitt der Längsnuten wird so verdrallt, dass die Längsnuten des Rohlings von der zu der Achse parallelen Ausrichtung in die Ausrichtung gemäß der Wendelsteigung in dem Förderbereich kontinuierlich umgeformt werden. Der erste Teilabschnitt hat eine Länge, die wenigstens einem Viertel der Ganghöhe entspricht. Ein zweiter Teilabschnitt der Längsnuten ist von dem Verdrallen ausgenommen.

Die Längsnuten werden vorzugsweise durch ein Längswalzen eingeformt.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer
- Fig. 2: einen Querschnitt durch den Bohrer in der Ebene II-II
- Fig. 3: einen Querschnitt durch den Bohrer in der Ebene III-III
- Fig. 4: einen Querschnitt durch den Bohrer in der Ebene IV-IV
- Fig. 5: einen Querschnitt durch den Bohrer in der Ebene V-V
- Fig. 6: einen Querschnitt durch den Bohrer in der Ebene VI-VI
- Fig. 7: einen Längsschnitt durch einen geradlinigen Abschnitt der Wendel,
- Fig. 8: abgerollte Darstellung der Wendel
- Fig. 9: Walzen eines Rohlings

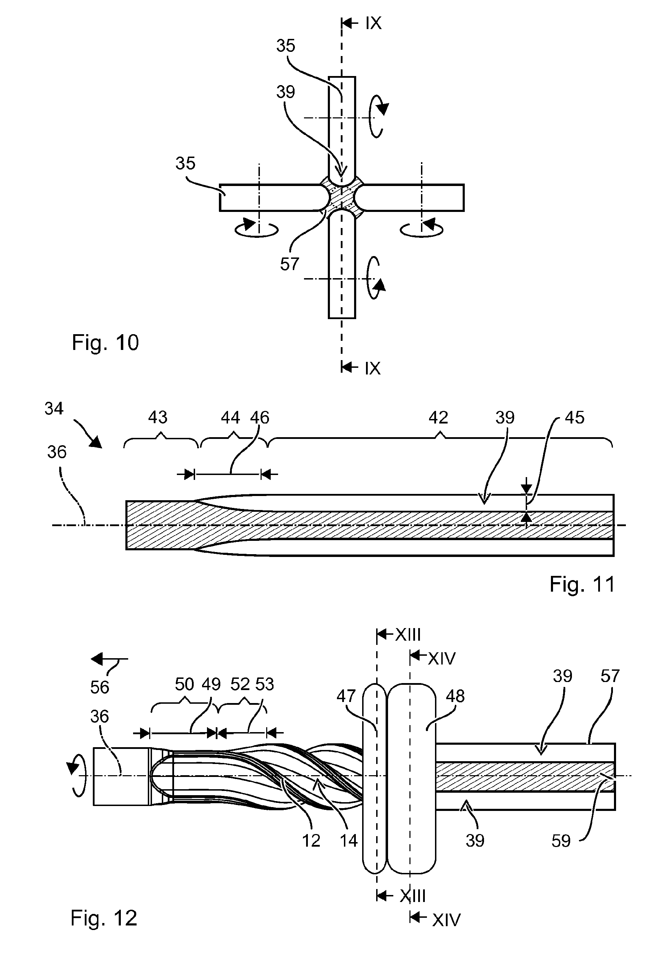

- Fig. 10: einen Querschnitt zu Fig. 9
- Fig. 11: einen Halbling
- Fig. 12: Umformen des Halblings mit einer rotierenden Matrize
- Fig. 13: Querschnitt durch eine Stützmatrize
- Fig. 14: Querschnitt durch eine Matrize

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

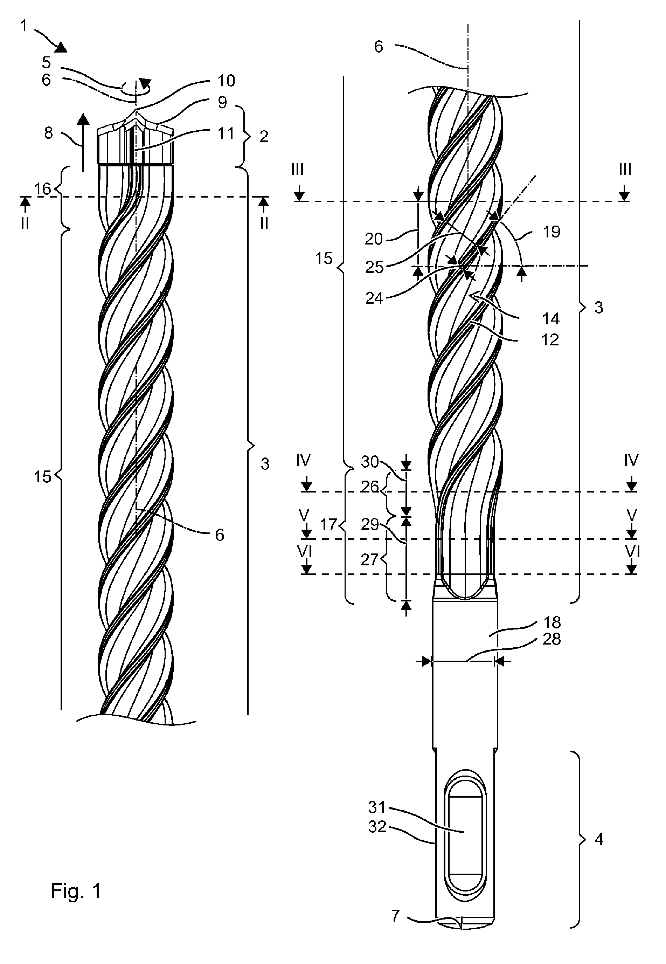

Fig. 1 zeigt einen beispielhaften Bohrer **1**. Der Bohrer **1** hat einen Bohrkopf **2**, einen Wendel **3** und ein Einsteckende **4**. Der Bohrer **1** ist beispielsweise für den Abbau von mineralischen Werkstoffen, z.B. armiertem Beton, ausgelegt. Der Bohrer **1** wird im Betrieb in einem Drehsinn **5** um seine Längsachse **6** (Bohrerachse) gedreht. Der Bohrer **1** kann dazu in eine Handwerkzeugmaschine eingesetzt werden, welche einen entsprechenden Drehantrieb aufweist. Ein Schlagwerk der Handwerkzeugmaschine schlägt periodisch auf das freie Ende **7** des Einsteckendes **4**. Die Stoßwelle der Schläge läuft durch die Wendel **3** in Schlagrichtung **8** zu dem Bohrkopf **2**. Der Bohrkopf **2** zertrümmert den Werkstoff. Die Drehbewegung stellt erstens sicher, dass der Bohrkopf **2** unter verschiedenen Orientierungen auf den Untergrund aufschlägt und das Bohrloch gleichmäßig ausgeschlagen wird, und bewirkt zweitens den Abtransport des Bohrguts aus dem Bohrloch mittels der Wendel **3**.

Der beispielhafte Bohrkopf **2** hat vier Meißelkanten **9**. Die Meißelkanten **9** laufen an einer Spitze **10** auf der Bohrerachse **6** zusammen. Die Spitze **10** ist vorzugsweise der in Schlagrichtung **8** höchste Punkt, welche somit beim Bohren zuerst den Werkstoff kontaktiert. Die Meißelkanten **9** können in radialer Richtung von außen zur Bohrerachse **6** hin längs der Schlagrichtung **8** ansteigen. Die Meißelkanten **9** weisen alle in die Schlagrichtung **8**. Die Meißelkante **9** wird durch jeweils eine im Drehsinn vorauslaufende Facette und eine nachlaufende Facette gebildet, die beide in die Schlagrichtung **8** weisen. Die beiden Facetten sind zueinander geneigt, der Dachwinkel an der Meißelkante **9** ist größer als 45 Grad, vorzugsweise größer 60 Grad und geringer als 120 Grad. Die Meißelkanten **9** können alle gleich ausgestaltet sein, oder paarweise verschieden sein. Der Bohrkopf **2** hat vier Abbruchkanten **11**, die parallel zu der Bohrerachse **6** verlaufen. Die Abbruchkanten **11** gehen in die Meißelkanten **9** über. Die Abbruchkanten **11** definieren den Durchmesser des Bohrkopfs **2**. Die Anzahl der Meißelkanten **9** und der Abbruchkanten **11** kann in Abhängigkeit des Durchmessers des Bohrers **1** gewählt sein. Beispielsweise kann bei einem Bohrer **1** geringen Durchmessers der Bohrkopf **2** zwei Meißelkanten **9**, ein Bohrkopf **2** großen Durchmessers mehr als vier Meißelkanten **9** und entsprechende Zahl von Abbruchkanten **11** aufweisen.

Der Bohrkopf **2** ist vorzugsweise aus einem gesinterten Werkstoff, insbesondere Wolframkarbid, hergestellt. Die Meißelkanten **9** und die Abbruchkanten **11** sind vorzugsweise monolithisch zusammenhängend, insbesondere ohne Fügezone miteinander verbunden.

Die Wendel **3** des Bohrers **1** hat beispielsweise vier Wendelstege **12**. Die Anzahl der Wendelstege **12** ist vorzugsweise gleich der Anzahl der Meißelkanten **9**. Die Wendelstege **12** laufen längs der Bohrerachse **6** mehrfach um diese Bohrerachse **6** um. Die Wendelstege **12** beschreiben beim Drehen des Bohrers **1** eine zylindrische Einhüllende **13**. Jeweils benachbarte Wendelstege **12** schließen zwischen sich eine Wendelnut **14** ein, die in radialer Richtung durch die Einhüllende **13** als geometrisch begrenzt angesehen wird. Das Bohrgut wird in den Wendelnuten **14** durch die Wendelstegen **12** längs der Bohrerachse **6** transportiert.

Die Wendel **3** hat längs der Bohrerachse **6** verschiedene Abschnitte, die sich um verschiedenen Anforderungen gerecht zu werden, in der Steigung der Wendelstege **12** unterscheiden. Ein Förderbereich **15** ist der dominierende Abschnitt und dient dem Fördern des Bohrguts. Der Förderbereich **15** erstreckt sich typischerweise um mehr als 80 % der Länge der Wendel **3**. Der Förderbereich **15** kann unmittelbar an den Bohrkopf **2** angrenzen, alternativ ist zwischen dem Bohrkopf **2** und dem Bohrkopf **2** ein Befestigungsbereich **16**, welcher an besondere Erfordernisse für die Befestigung des Bohrkopfs **2** an die Wendel **3** ausgelegt ist. Die Wendel **3** schließt an ihrem zum Einsteckende **4** weisenden Ende **7** mit einem Auslaufbereich **17** ab. Der Auslaufbereich **17** geht in den zylindrischen Schaft **18** des Einsteckendes **4** über.

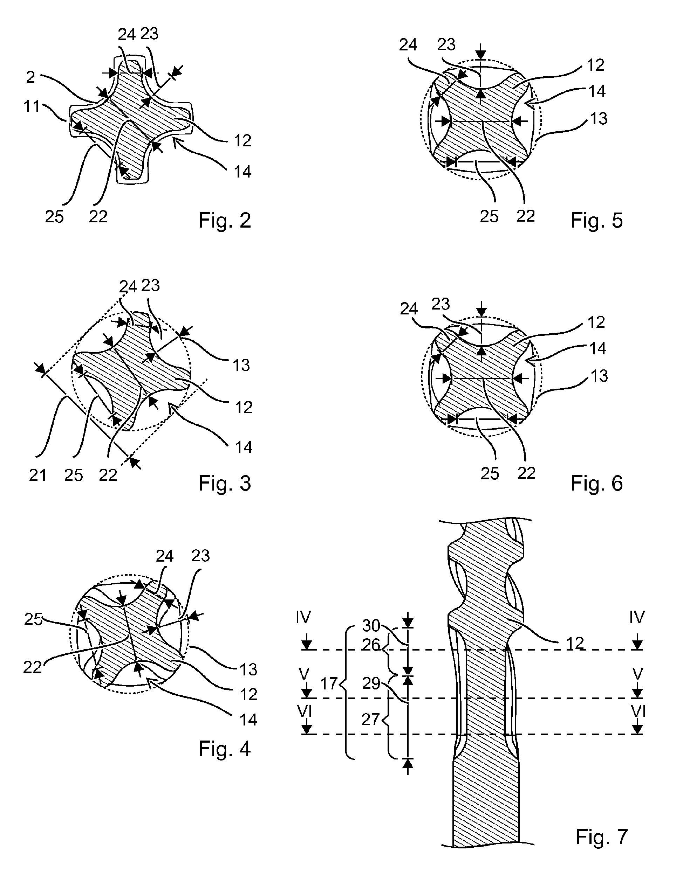

In dem Förderbereich **15** liegt eine Wendelsteigung **19** der Wendelstege **12**, d.h. eine Neigung der Wendelstege **12** gegenüber einer zu der Bohrerachse **6** senkrechten Ebene, in einem Bereich zwischen 35 Grad und 70 Grad. Die Wendelsteigung **19** der Wendelstege **12** ist vorzugsweise über den gesamten Förderbereich **15** konstant. Die konstante Wendelsteigung **19** stellt einen gleichmäßigen Transport des Bohrguts in der Wendel **3** sicher. Die konstante Wendelsteigung **19** bedingt eine konstante Ganghöhe **20** der Wendel **3**. In einer alternativen Ausgestaltung können die Wendelsteigung **19** und die Ganghöhe **20** in Schlagrichtung **8** zunehmen. Die Wendel **3** hat in dem Förderbereich **15** einen längs der Bohrerachse **6** gleichbleibenden Querschnitt (Fig. 3), der sich kontinuierlich um die Bohrerachse **6** dreht. Der Querschnitt kann unter Anderem durch den Wendeldurchmesser **21**, einen Kerndurchmesser **22**, eine Höhe der Wendelstege **12** und Tiefe **23** der Wendelnuten **14**, eine mittlere Stärke **24** der Wendelstege **12** und eine mittlere Breite **25** der Wendelnuten **14** beschrieben werden. Der Wendeldurchmesser **22** ist der Durchmesser des Bohrers **1** oder der Einhüllenden **13** der Wendel **3**, d.h. des kleinsten Hohlzylinders, in welchem die Wendel **3** um ihrer Bohrerachse **6** gedreht werden kann. Der Kerndurchmesser **22** ist der Durchmesser des größten Kreises, der sich vollständig in den Querschnitt der Wendel **3** einschreiben lässt. Die mittlere Stärke **24** und die mittlere Breite **25** können zum Beispiel auf halber Höhe der Wendelstege **12** bestimmt werden. Der Kerndurchmesser **22**, die Höhe der Wendelstege **12** und die Tiefe **23** der Wendelnuten **14** bleibt längs des gesamten Förderbereichs **15** konstant. Vorzugsweise bleiben auch die mittlere Stärke **24** der Wendelstege **12** und die mittlere Breite **25** der Wendelnuten **14** längs des gesamten Förderbereichs **15** konstant.

Der Förderbereich **15** geht bei dem beispielhaft dargestellten Bohrer **1** in Schlagrichtung **8** in den Befestigungsbereich **16** über. Der Bohrkopf **2** ist auf der vorzugsweise ebenen Stirnseite des Befestigungsbereichs **16** angelötet oder angeschweißt. Die Wendelsteigung **19** nimmt in dem Befestigungsbereich **16** kontinuierlich zu. Vorzugsweise geht die Wendelsteigung **19** in eine zu der Bohrerachse 6 parallele Orientierung über. Der Querschnitt der Wendel **3** in dem Befestigungsbereich **16** kann über dessen gesamte Länge konstant bleiben. Vorzugsweise ist der Querschnitt des Befestigungsbereichs **16** deckungsgleich zu dem Querschnitt in dem Förderbereich **15**. Insbesondere sind vorzugsweise der Kerndurchmesser **22**, die Höhe der Wendelstege **12** und die Tiefe **23** der Wendelnuten **14** gleichbleibend.

In dem Auslaufbereich **17** der Wendel **3** gehen die Wendelstege **12** aus dem Förderbereich **15** in das zylindrische Einsteckende **4** über. Der Auslaufbereich **17** ist längs der Bohrerachse **6** in einen gekrümmten Abschnitt **26** und einen geradlinigen Abschnitt **27** unterteilt. Der gekrümmte Abschnitt **26** grenzt an den Förderbereich **15** an, der geradlinige Abschnitt **27** grenzt an das zylindrische Einsteckende **4** an. Fig. 4 zeigt einen Querschnitt durch den gekrümmten Abschnitt **26** in der Ebene IV-IV, Fig. 5 zeigt einen ersten Querschnitt durch den geradlinigen Abschnitt **27** in der Ebene V-V und Fig. 6 zeigt einen zweiten Querschnitt durch den geradlinigen Abschnitt **27** in der Ebene VI-VI. Die Querschnitte sind im Maßstab 2:1 gegenüber der Darstellung von Fig. 1. Fig. 7 zeigt einen Längsschnitt entlang der Bohrerachse **6** durch den Auslaufbereich **17bz**.

Die Wendelstege **12** verlaufen in dem geradlinigen Abschnitt **27** durchgehend parallel zu der Bohrerachse **6**, d.h. mit einer Wendelsteigung **19** von 90 Grad. Die Wendelstege **12** und die Wendelnuten **14** bilden ihre Form in dem geradlinigen Abschnitt **27** aus. Die Höhe der Wendelstege **12** und die Tiefe **18** der Wendelnuten **14** erreichen in dem geradlinigen Abschnitt **27** die Werte des Förderbereichs **15**. Der angrenzende Schaft **18** ist zylindrisch mit einem Schaftdurchmesser **28**. Die Wendelstege **12** steigen gegenüber dem Schaftdurchmesser **28** an und die Böden der Wendelnuten **14** sinken gegenüber dem Schaftdurchmesser **28** in Schlagrichtung **8** ab. Die Wendel **3** erreicht innerhalb des geradlinigen Abschnitts **27** bereits den Querschnitt, welcher sich in dem Förderbereich **15** fortsetzt. Insbesondere erreicht der Querschnitt den Wendeldurchmesser **21**, den Kerndurchmesser **22** und die Tiefe **18** der Wendelnuten **14**. Die Höhe der Wendelstege **12** bzw. die Tiefe **18** der Wendelnuten **14** erreicht beispielsweise zwischen 20 % und 25 % des Wendeldurchmessers **21**. Der geradlinige Abschnitt **27** hat vorzugsweise eine Länge **29**, die zwischen einem Viertel und dem Dreifachen der Ganghöhe **20** im Förderbereich **15** entspricht, vorzugsweise ist die Länge **29** größer als die Ganghöhe **20**. Die parallel zu der Bohrerachse **6** und geradlinig verlaufenden Wendelstege **12** erweisen sich als günstig für die Stabilität des Bohrers **1** gegenüber Biegebelastungen. Die Biegebelastungen treten beispielsweise auf, wenn der Anwender den Bohrer **1** nicht ausschließlich parallel zu der Bohrerachse **6** führt, sondern zum Beispiel aufgrund des Gewichts der Bohrmaschine an dem Bohrer **1** quer zu der Bohrerachse **6** hängen lässt.

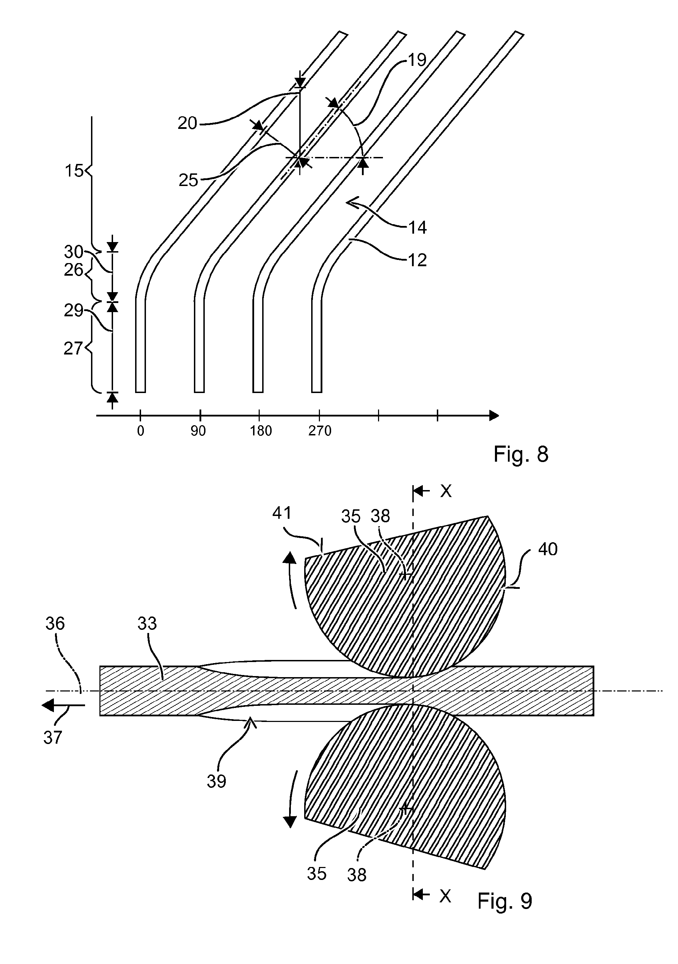

In dem gekrümmten Abschnitt **26** des Auslaufbereichs **17** verringert sich kontinuierlich die Wendelsteigung **19**. Die Wendelstege **12** gehen von der zu der Bohrerachse **6** parallelen Ausrichtung in dem geradlinigen Abschnitt **27** in die geneigte Orientierung des Förderbereichs **15** über. Die Änderung der Wendelsteigung **19** ist in Fig.8 in einer abgerollten Darstellung der viergängigen Wendel 3 illustriert. Die Länge **30** des gekrümmten Abschnitts **27** ist größer als 25 % der Ganghöhe **20**, vorzugsweise größer als 50 % der Ganghöhe **20**. Die langsame Anpassung der Wendelsteigung **19** verbessert die Biegebelastbarkeit der Wendel **3**. Die Länge **30** ist vorzugsweise geringer 100 % der Ganghöhe **20**. Die Änderung der Wendelsteigung **19** kann bezogen auf den Umlaufwinkel des Wendelstegs **12** im Drehsinn **5** angegeben werden. Die Wendelsteigung **19** erhöht sich vorzugsweise zwischen 0,5 Grad und 2 Grad für jedes Grad, das sich der Wendelsteg **12** um die Bohrerachse **6** windet. Die Änderungsrate kann konstant sein.

Das beispielhafte Einsteckende **4** des Bohrers **1** ist für die Verwendung von drehmeißelnden Handwerkzeugmaschinen ausgelegt. Das Einsteckende **4** hat zwei geschlossene Nuten **31**, in welchen Verriegelungselemente der Handwerkzeugmaschine radial eingreifen und längs der Bohrerachse **6** gleiten können. Zur Bohrerachse **6** längs ausgerichtete Stege **32** ermöglichen ein Einleiten eines Drehmoments von der Handwerkzeugmaschine.

Ein beispielhaftes Herstellungsverfahren beginnt mit einem stabförmigen und zylindrischen Rohling **33**. Der Rohling hat vorzugsweise eine Querschnittsfläche, die etwa gleich oder um bis zu 50 % größer als die Querschnittsfläche der Wendel **3** ist. Die Länge des Rohlings **33** liegt beispielsweise etwa im Bereich zwischen der Länge **34** der Wendel **3** und der Länge des Bohrers **1**. Der Rohling **33** besteht vorzugsweise aus einem niedriglegiertem Stahl.

Der Rohling **33** wird einem ersten Walzgerüst zugeführt und in einen Halbling **34** umgeformt (Fig. 9). Das Walzgerüst hat mehrere Walzen **35**, die parallel zu der Achse **36** des Rohlings **33** abrollen. Die Walzen **35** rotieren um entsprechend zu der Vorschubrichtung **37** und Achse **36** senkrechte Drehachsen **38**. Die Walzen **35** erzeugen zu der Achse **36** parallele Längsnuten **39** in dem Halbling **34**.

Die beispielhaften Walzen **35** haben entlang ihres Umfangs ein kreisförmiges Segment **40** zum Umformen des Rohlings **33** und ein flaches Segment **41**. Die Walzen **35** werden mit den flachen Segmenten **41** dem Rohling **33** zugewandt ausgerichtet. Der Abstand der flachen Segmente zu der Achse **36** ist größer als der Radius des Rohlings **33**. so dass der Rohling **33**, ohne umgeformt zu werden, längs der Achse **36** zwischen die Walzen **35** eingeführt werden kann. Der Rohling **33** wird für eine vorgegebene Strecke zwischen die Walzen **35** hineingeschoben. Die Walzen **35** werden nun geschwenkt, wodurch die kreisförmigen Segmente in den Rohling **33** eingreifen und den Rohling **33** umformen. Der Abstand der kreisförmigen Segmente zu der Achse **36** ist entsprechend geringer als der Radius des Rohlings **33**. Die Walzen **35** treiben den Rohling **33** in die Vorschubrichtung **37** vor, bis der Rohling **33** zwischen den Walzen **35** herausfällt.

Die Längsnuten **39** werden in einen umzuformenden Abschnitt **42** des Rohlings **33** eingebracht. Ein unverändert zu belassener Abschnitt **43** des Rohlings **33** bleibt unbearbeitet. Die Längsnuten **39** haben einen Übergangsbereich **44** zwischen dem umgeformten Abschnitt **43** und dem unveränderten Abschnitt **43**. In dem Übergangsbereich **44** ändert sich kontinuierlich der Querschnitt von dem umgeformten Abschnitt **42** an den unveränderten Abschnitt **43** an. Die Tiefe **45** wird über eine Distanz **46** erreicht, welche einem Fünftel bis zu der Hälfte der Tiefe **45** entspricht.

Alternativ zu dem Walzen, können die Längsnuten in den Rohling mittels Fließpressen eingebracht werden. Eine Matrize hat eine trichterförmig zulaufende Öffnung. Die Öffnung verjüngt sich bis auf einen Querschnitt entsprechend dem Komplementär zu dem ersten Abschnitt des Halblings. Die Trichterform der Matrize ist komplementär zu dem Übergangsbereich. Die Matrize ist demzufolge wenigstens so lange wie der Übergangsbereich. Der Nutboden steigt vorzugsweise durchgehend kontinuierlich in dem Übergangsbereich an. Die Form des Nutbodens längs der Achse kann kreissegmentförmig oder geradlinig stetig ansteigend sein.

Der Halbling **35** wird anschließend ausschließlich in dem umgeformten Abschnitt **42** verdrallt. Das Verdrallen erfolgt beispielsweise mit einer Matrize **47** und einer Stützmatrize **48**. Der umzuformende Abschnitt **42** des Halblings **35** wird in die Matrize **47** und die Stützmatrize **48** eingeschoben. Die Matrize **47** hat einen Abstand **49** zu dem unveränderten Abschnitt **43**. Der Abstand kann beispielsweise zwischen dem ein- bis dreifachem der späteren Ganghöhe **20** der Wendel **3** betragen. Ein Teilabschnitt **50** des umgeformten Abschnitts **42** wird nicht verdrallt, sondern behält seine geradlinigen Längsnuten **39**. Der Teilabschnitt **50** umfasst wenigstens den Übergangsbereich **44**, vorzugsweise ist der Teilabschnitt **50** länger als der Übergangsbereich. Die Längsnuten **51** erreichen bereits in dem Teilabschnitt **50** ihre volle Tiefe **45**.

Die Matrize **47** wird gegenüber der Stützmatrize **48** im Drehsinn **5** der Wendel **3** um einen Verschwenkwinkel verschwenkt. Anschließend wird der Halbling **35** aus der Matrize **47** und der Stützmatrize **48** herausgezogen, wodurch sich der umzuformende Abschnitt **42** in die Wendel **3** verdrallt. Der Verschwenkwinkel wird anfangs innerhalb eines zweiten Teilabschnitts **52** kontinuierlich bis auf einen Sollwert erhöht und dann konstant gehalten. Die Länge **53** des zweiten Teilabschnitts **52** liegt zwischen einem Viertel und einer Ganghöhe **20** der herzustellenden Wendel **3**. Der Sollwert für das Verschwenken gibt im Zusammenspiel mit der inneren Geometrie der Matrize **47** die Wendelsteigung **19** vor. Die Wendelsteigung **19** ändert sich in dem zweiten Teilabschnitt **52** mit einer geringen Rate längs der Bohrerachse **6** bzw. dem Drehsinn **5** der Wendel **3**. Die Rate liegt vorzugsweise im Bereich zwischen 0,25 Grad und 2,0 Grad mit jedem Grad das sich die Wendel **3** um die Bohrerachse **6** windet. Beispielsweise ändert sich die Wendelsteigung **19** von 90 Grad auf 45 Grad innerhalb einer achtel Drehung der Wendel **3**, d.h. mit einer mittleren Rate von 1,0 Grad pro Grad.

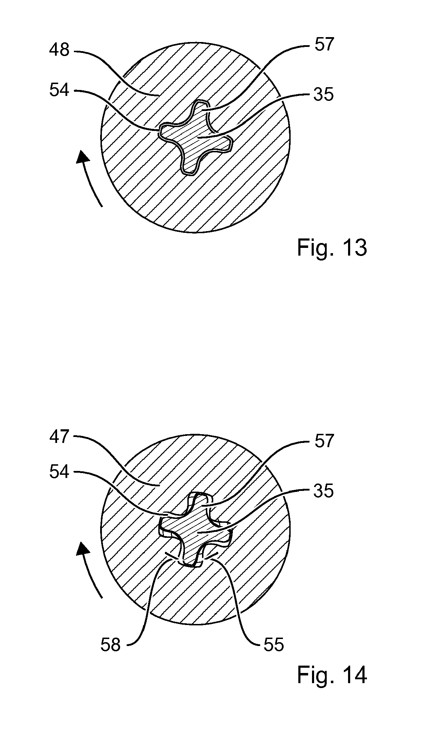

Die Stützmatrize **48** hat eine prismatische Durchgangsöffnung **54** (Fig. 13). Der hohle Querschnitt der Durchgangsöffnung entspricht vorzugsweise dem Querschnitt des umgeformten Abschnitts **27** des Halblings **35** bzw. dem Querschnitt der Wendel **3** entsprechen. Die Stützmatrize **48** kann gleitend auf den Halbling **35** aufgeschoben werden, ohne diesen umzuformen und mit vorzugsweise geringem Spiel. Die Innenflächen der Stützmatrize **48** sind vorzugsweise parallel zu der Achse **36**.

Die Matrize **47** hat eine Durchgangsöffnung **54**, die es erlaubt, die den Halbling **35** ohne Kraftaufwand in die Matrize **47** einzuführen (Fig. 14). Die Durchgangsöffnung **54** umfasst einen prismatischen Hohlraum, dessen hohler Querschnitt dem Querschnitt des umgeformten Abschnitts **27** des Halblings **35**, ergo dem Querschnitt der Wendel **3**, entspricht. Die dem Drehsinn **5** abgewandten Innenflächen **55** sind so geneigt, dass sich der Querschnitt längs der Abzugsrichtung **56** verjüngt. Beim Verschwenken der Matrize **47** drücken die geneigten Innenflächen **55** auf die geradlinigen Stege **57** des Halblings **35**. Die Stege **57** sind in der Stützmatrize **48** abgestützt, wodurch sich die Stege **32** hauptsächlich innerhalb der Matrize **47** umformen. Die Matrize **47** dient nur dazu die geradlinigen Stege **32** zu verdrallen, die Tiefe **45** der Längsnuten **39** bleibt weitgehend erhalten und überträgt sich in die Tiefe der Wendelnuten **14**. Die dem Drehsinn **5** zugewandten Innenflächen **58** sind vorzugsweise parallel zu der Achse 3**6**.

Das eine Ende des Halblings **35** auf der Seite der Matrize **47** dreht sich aufgrund des Umformens gegenüber der Stützmatrize **48** und dem anderen Ende **59** des Halblings **35**. Ein Antrieb kann die Drehbewegung unterstützen.

Ein Bohrkopf **2**, vorzugsweise aus Wolframcarbid, wird an dem freien Ende **59** des Halblings **35** angeschweißt oder angelötet.

## Patentansprüche

1. Bohrer (1), der längs einer Bohrerachse (6) einen Bohrkopf (2), eine mehrgängigen Wendel (3) aus zwei oder mehr Wendelstegen (12) und ein Einsteckende (4) aufweist, wobei die Wendel (3) in einem Förderbereich (15) eine Wendelsteigung (19) und eine Ganghöhe (20) aufweist **dadurch gekennzeichnet, dass**
in einem dem Einsteckende (4) zugewandten Auslaufbereich (17) der Wendel (3) die Wendelstege (12) innerhalb eines ersten Abschnitts (26) von einer Ausrichtung mit der Wendelsteigung (19) kontinuierlich in eine zu der Bohrerachse (6) parallele Ausrichtung übergehen, wobei eine Länge (30) des Abschnitt (26) wenigstens ein Viertel der Ganghöhe (20) des Förderbereichs (15) beträgt, und die Wendelstege (12) in einem zweiten Abschnitt (27) parallel zu der Bohrerachse (6) ausgerichtet sind.

2. Bohrer (1) nach Anspruch 1, **dadurch kennzeichnet, dass** der Förderbereich (15) und der erste Abschnitt (26) des Auslaufbereichs (17) einen abgesehen von der Orientierung bezüglich der Bohrerachse (6) gleichbleibenden Querschnitt aufweisen.

3. Bohrer (1) nach Anspruch 1 oder 2, **dadurch gekennzeichnet dass** die Wendelnuten (14) in dem Förderbereich (15) und dem ersten Abschnitt (26) eine gleichbleibende Tiefe (23) aufweisen.

4. Bohrer (1) nach einem der vorhergehenden Ansprüche, **dadurch gekennzeichnet, dass** in dem ersten Abschnitt (26) die Wendelsteigung (19) der Wendelstege (12) gegenüber der Bohrerachse (6) mit einer Rate zwischen 0,25 Grad und 2 Grad pro einem Grad in dem Drehsinn (5) der Wendel (3) abnimmt.

5. Bohrer (1) nach Anspruch 4, **dadurch gekennzeichnet, dass** in dem ersten Bereich die Wendelsteigung (19) in dem Drehsinn (5) der Wendel (3) kontinuierlich mit der Rate von einer Wendelsteigung (19) von 90 Grad auf eine Wendelsteigung (19) zwischen 30 Grad und 70 Grad abfällt.

6. Bohrer (1) nach einem der vorhergehenden Ansprüche, **dadurch gekennzeichnet, dass** eine Länge (29) des zweiten Abschnitts (27) zwischen einem Viertel und dem Dreifachen der Ganghöhe (20) des Förderbereichs (15) liegt.

7. Bohrer (1) nach einem der vorhergehenden Ansprüche, **dadurch gekennzeichnet, dass** ein Querschnitt des zweiten Abschnitts (27) über wenigstens die Hälfte des zweiten Abschnitts (27) konstant ist.

8. Bohrer (1) nach einem der vorhergehenden Ansprüche, **dadurch gekennzeichnet, dass** der Bohrkopf (2) aus einem gesinterten Hartmetall ist.

9. Bohrer (1) nach Anspruch 8, **dadurch gekennzeichnet, dass** der Bohrkopf (2) zu der Bohrerachse (6) parallele Abbruchkanten (11) aufweist.

10. Herstellungsverfahren für einen Bohrer mit einer mehrgängigen Wendel (3) und einem Einsteckende (4) mit den Schritten:
Umformen eines zylindrischen Rohlings (33), indem mehrere geradlinige, parallel zu der Achse (36) des Rohlings (33) ausgerichtete Längsnuten (39) in den Rohling (33) eingeformt werden,
Verdrallen der geradlinigen Längsnuten (39) mittels eines Verdrallwerkzeugs (47) zum Erzeugen einer Wendel (3) mit einer Wendelsteigung (19) und einer Ganghöhe (20) in einem Förderbereich (15), wobei in einem ersten Teilabschnitt (52) der Längsnuten (39), dessen Länge (30) wenigstens einem Viertel der Ganghöhe (20) entspricht, die Längsnuten (39) des Rohlings (33) von der zu der Achse (36) parallelen Ausrichtung in die Ausrichtung gemäß der Wendelsteigung (19) in dem Förderbereich (15) kontinuierlich umgeformt werden und ein zweiter Teilabschnitt (50) der Längsnuten (51) von dem Verdrallen ausgenommen ist.

11. Herstellungsverfahren nach Anspruch 10, **dadurch gekennzeichnet, dass** eine Länge (49) des zweiten Teilabschnitts (50) zwischen einem Viertel und dem Dreifachen der Ganghöhe (20) des Förderbereichs (15) liegt.

12. Herstellungsverfahren nach Anspruch 10 oder 11, **dadurch gekennzeichnet, dass** die Längsnuten (39) durch ein Walzen (35) längs der Achse (36) des Rohlings (33) geformt werden.
